# NEUE EUROPÄISCHE PATENTSCHRIFT

(11) **EP 1 000 781 B2**
(45) Veröffentlichungstag und Bekanntmachung des Hinweises auf die Entscheidung über den Einspruch: **29.09.2004**
(45) Hinweis auf die Patenterteilung: 01.08.2001
(21) Anmeldenummer: 98121601.3
(22) Anmeldetag: 12.11.1998
(51) Int. Cl.: B60G 15/06, F16C 33/76

(54) **Federbeinlager**
Mounting for telescopic strut
Support de jambe télescopique

(43) Veröffentlichungstag der Anmeldung: 17.05.2000
(73) Patentinhaber: Schwarzbich, Jörg, 33615 Bielefeld (DE)
(72) Erfinder: Schwarzbich, Jörg, 33615 Bielefeld (DE)
(74) Vertreter: TER MEER STEINMEISTER & PARTNER GbR

(56) Entgegenhaltungen:
- EP-A- 0 390 331
- EP-A- 0 541 036
- DE-A- 2 329 910
- DE-A- 2 658 748
- DE-A- 4 227 474
- DE-A- 4 229 199
- FR-A- 2 375 484
- FR-A- 2 551 515
- GB-A- 1 371 341
- GB-A- 2 145 781
- JP-A- 58 124 825
- US-A- 3 844 631
- US-A- 3 951 482
- US-A- 4 274 655
- US-A- 4 780 005
- Technique de l'Ingénieur B5421, S. 14,15 §7, 3223 Joints à lèvre, Figur 85, ohne Veröffentlichungsdatum

## Beschreibung

Die Erfindung betrifft ein Federbeinlager mit zwei Laufringen und axial zwischen diesen angeordneten Wälzkörpern sowie mit einer Dichtung, die den Zwischenraum zwischen den Laufringen abdichtet.

Solche Federbeinlager dienen zur Abstützung der Federbeine für die lenkbaren Räder von Kraftfahrzeugen an der Fahrzeugkarosserie. Das Federbein wird im wesentlichen durch einen Stoßdämpfer und eine diesen umgebende Schraubenfedergebildet. Der Kopf des Stoßdämpfers ist mit der Fahrzeugkarosserie verbunden und wird von dem Lager umgeben, dessen Gehäuse einen entsprechend großen Innendurchmesser aufweisen muß. Ein fest mit der Fahrzeugkarosserie verbundenes Bauteil stützt sich auf dem oberen Laufring des Lagers ab, während der untere Laufring sich auf einen Federteller abstützt, der ein Widerlager für das obere Ende der Schraubenfeder bildet. Das Lager muß somit eine hohe Axialkraft aufnehmen, die dem auf das betreffende Rad entfallenden Anteil des Fahrzeuggewichts entspricht. Da das Federbein zumeist schräg zur Vertikalen verläuft, ist das Lager darüber hinaus auch einer relativ hohen Radialkraft ausgesetzt.

Bekannte Federbeinlager dieser Art (DE-A-26 58 748) weisen ein Gehäuse aus zwei ringförmigen, miteinander verrasteten Halbschalen aus Kunststoff auf, die die Laufringe einschließen und an denen die Dichtung ausgebildet sind. Angesichts der hohen Gewichtsbelastung muß für das Gehäuse ein relativ hartes Kunststoffmaterial verwendet werden. Die Dichtung wird durch einstückig an die Halbschalen angeformte Dichtlippen oder Labyrinthprofile gebildet und hat den Zweck, die in dem Gehäuse untergebrachten Laufringe und Wälzkörper gegen Schmutz und Spritzwasser zu schützen.

Aus DE-A 42 27 474 ist ein Radiallager bekannt, bei dem an den Käfig für die Wälzkörper auf beiden Seiten zwei weiche Dichlippen angeformt sind, die an den inneren und äußeren Laufringen abdichten.

Wenn beim Lenken das Fahrzeugrad eingeschlagen wird, soll das Federbeinlager eine leichtgängige Drehung des Federbeins um seine Längsachse ermöglichen.

Bei herkömmlichen Federbeinlagern kann es jedoch während des Lenkeinschlages zu einem Blokkieren des Lagers kommen, so daß die Drehung des Federtellers gehemmt und die Schraubenfeder auf Torsion beansprucht wird. Wenn die Torsionskraft die Hemmung des Federtellers überwindet, kommt es dann zu einer ruckartigen Drehung des Federtellers, und die Schraubenfeder entspannt sich, bis das Lager erneut blockiert. Dieser auch als "Federspringen" bezeichnete Effekt macht sich für den Fahrer in einer leichten Vibration und einer unangenehmen Geräuschbildung während des Lenkeinschlags bemerkbar.

Aufgabe der Erfindung ist es. ein Federbeinlager zu schaffen, bei dem ein solches Federspringen vermieden wird.

Diese Aufgabe wird mit den in Anspruch 1 angegebenen Merkmalen gelöst.

Diese Lösung beruht auf der Erkenntnis, daß bei dem herkömmlichen Federbeinlager das Federspringen maßgeblich darauf zurückzuführen ist, daß dort die Lippen oder ein Labyrithprofile der Dichtung aus demselben harten Kunststoffmaterial wie die übrige Halbschale des Gehäuses besteht. Aufgrund der erwähnten Radialkräfte und der mangelden Nachgiebigkeit der Dichtung können an den miteinander in Berührung kommenden Dichtflächen so hohe Reibungskräfte auftreten, daß die Verdrehung der beiden Halbschalen relativ zueinander gehemmt wird und es zu einem Stick-Slip-Effekt kommt, der unter Umständen durch Resonanzen der Schraubenfeder noch verstärkt wird und so die erwähnte Vibration und Geräuschbildung verursacht. Erfindungsgemäß wird durch die Verwendung eines weichen Materials für die Dichtung oder zumindest für Teile der Dichtung eine größere Nachgiebigkeit erreicht, so daß dieser Effekt weitgehend unterdrückt wird. Andererseits wird dadurch. daß die Dichtung weiterhin unmittelbar an den Hauptteil der Halbschale angespritzt ist, eine einfache Herstellung der Halbschale als einstückiges Bauteil ermöglicht, wobei sich die Oichtungsstrukturen angesichts der beengten räumlichen Verhältnisse hinreichend kleinbauend gestalten lassen.

Bei der Herstellung kann die Halbschale in zwei Schritten aus Kunststoff gespritzt werden. In diesem Fall wird in einem ersten Schritt der Hauptkörper der Halbschale aus dem harten Kunststoffmaterial gespritzt, und anschließend wird in einem zweiten Schritt die Dichtung aus weicherem Material angespritzt. Alternativ kann auch ein Zweikomponentenverfahren eingesetzt werden, bei dem der härtere Hauptkörper der Halbschale und die weichere Dichtung in einem Arbeitsgang gespritzt werden.

Vorteilhafte Ausgestaltungen der Erfindung ergeben sich aus den Unteransprüchen.

Generell genügt es, wenn die eigentliche Dichtlippe durch eine Materialbrücke aus dem weicheren Material mit dem Hauptkörper der Halbschale verbunden oder dem Laufring ist, so daß die nötige Nachgiebigkeit der Dichtung erreicht wird. Die Dichtlippe selbst könnte dann wieder aus einem härteren Material bestehen. In einer bervorzugten Ausführungsform besteht jedoch die Dichtung oder spezieller die Dichtlippe insgesamt aus einem weichen Material, beispielsweise aus weichem Kunststoff oder Gummi mit möglichst kleinem Reibungskoeffizienten.

Wenn die Dichtung als Labyrinth ausgebildet ist und somit im Normalfall keine Reibberührung zwischen den Dichtflächen stattfindet, kommt die efindungsgemäße Maßnahme dann zur Wirkung. wenn es aufgrund der Radialkräfte zu einer Verformung mindestens einer der beiden Halbschalen und /oder zu einer Verlagerung der Halbschalen bzw. Laufringe gegeneinander und damit zu einer Reibberührung zwischen den Dichtflächen kommt. In einer bevorzugten Ausführungsform ist die Dichtung jedoch als Lippendichtung ausgebildet, und die Dichtlippe steht ständig mit einer entsprechenden Gegenfläche an der anderen Halbschale oder dem anderen Laufring in Berührung.

Wie bei den herkömmlichen Federbeinlagern kann auch bei dem erfindungsgemäßen Federbeinlager die Dichtung so ausgebildet sein, daß sie es gestattet, die beiden Halbschalen des Gehäuses miteinander zu verrasten, so daß das Federbeinlager bis zum Einbau in das Fahrzeug bequem als eine Einheit gehandhabt werden kann.

Im folgenden wird ein Ausführungsbeispiel der Erfindung anhand der Zeichnung näher erläutert.

Es zeigen:
- Figur 1: einen Teilschnitt durch das obere Ende eines Kraftfahrzeug-Federbeins mit einem erfindungsgemäßen Federbeinlager; und
- Figur 2: einen vergrößerten Teilschnitt durch das Federbeinlager.

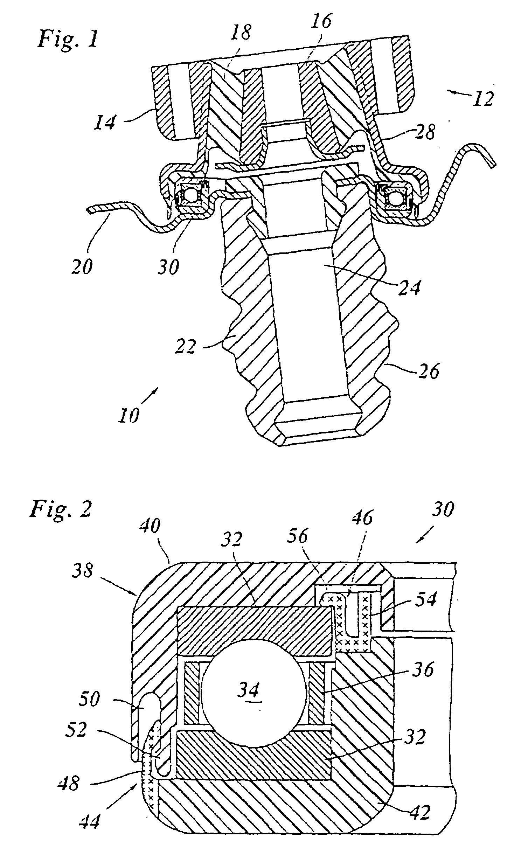

In Figur 1 sind Teile des oberen Endes eines Federbeins 10 dargestellt, das in einer leicht zur Vertikalen geneigten Position um seine Längsachse drehbar an einem karosseriefesten Dämpfungselement 12 gehalten ist. Das Dämpfungselement weist einen Außenring 14 und einen Innenring 16 aus Metall auf, zwischen denen ein ringförmiger Gummipuffer 18 eingefügt ist. Von dem Federbein 10 sind lediglich ein oberer Federteller 20 und ein Kopfstück 22 dargestellt, das eine Führung 24 für die nicht gezeigte Kolbenstange eines Stoßdämpfers bildet und am äußeren Umfang ein Befestigungsprofil 26 für eine Gummimanschette aufweist. Der Federteller 20 dient zur Abstützung des oberen Endes einer nicht gezeigten Schraubenfeder, die den erwähnten Stoßdämpfer umgibt und das Gewicht der Fahrzeugkarosserie abfedert.

Das obere Ende der nicht gezeigten Kolbenstange ist axialfest in dem Innenring 16 des Dämpfungselements 12 zu fixieren. Der Außenring 14 des Dämpfungselements bildet einen tellerförmigen, mit Teilen des Gummipuffers 18 ausgekleideten Sitz 28 für ein Federbeinlager 30.

Das Federbeinlager 30, dessen Querschnitt vergrößert in Figur 2 dargestellt ist, hat die Form eines Ringes mit verhältnismäßig großem Innendurchmesser, der Teile des Federtellers 20 und des Kopfstücks 22 umgibt. Im gezeigten Beispiel ist das Federbeinlager 30 als Axialkugellager mit oberen und unteren Laufringen 32 aus Stahl und einem die Lagerkugeln 34 aufnehmenden Kugelkäfig 36 ausgebildet. Die Laufringe 32 und der Kugelkäfig sind in einem ringförmigen Gehäuse 38 gehalten, das aus zwei ringförmigen Halbschalen 40, 42 zusammengesetzt ist. Die Halbschalen 40, 42 haben jeweils ein etwa L-förmiges Profil und sind im Spritzgießverfahren aus einem verhältnismäßig harten Kunststoff hergestellt der eine hohe Gewichtsbelastung aufnehmen kann. Das Fahrzeuggewicht stützt sich über den in Figur 1 gezeigten Sitz 28 und die obere Halbschale 40 des Gehäuses auf dem oberen Laufring 32 ab, während der untere Laufring 32 sich über die untere Halbschale 42 des Gehäuses auf dem Federteller 20 und weiter auf der nicht gezeigten Schraubenfeder abstützt.

Die beiden Halbschalen 40, 42 des Gehäuses 38 sind sowohl am äußeren als auch am inneren Umfangsrand des Gehäuses mit Dichtungen 44, 46 versehen. Diese Dichtungen haben vor dem Einbau des Federbeinlagers die Funktion, die beiden Halbschalen des Gehäuses mechanisch zusammenzuhalten. Nach dem Einbau haben sie die Funktion, das Gehäuseinnere, in dem die Laufringe 32 und der Kugelkäfig 36 untergebracht sind, gegen das Eindringen von Schmutz und Feuchtigkeit zu schützen sowie den Austritt von Schmiermittel zu verhindern.

Die Dichtung 44 am äußeren Umfangsrand wird durch eine an die Halbschale 42 angespritzte Dichtlippe 48 aus einem Kunststoffmaterial gebildet, das deutlich weicher ist als das Material des übrigen Teils der Halbschale 42 und das gegenüber dem Material der oberen Halbschale 40 einen niedrigen Reibungskoeffizienten aufweist. Diese Dichtlippe 48 greift in eine in der Außenwand der Halbschale 40 ausgebildete Tasche 50 ein und hintergreift ein am unteren Ende dieser Tasche ausgebildetes Rastprofil 52.

Die Dichtung 46 am inneren Umfangsrand des Gehäuses 38 wird durch ein Labyrinthprofil 54 und einer Dichtlippe 56 gebildet, die gleichfalls aus dem erwähnten weichen Kunststoffmaterial bestehen und an die Halbschale 42 angespritzt sind. Das Labyrinthprofil 52 und die Dichtlippe ragen in eine in der oberen Halbschale 40 gebildete Aussparung. Die Dichtlippe 54 steht im gezeigten Beispiel nicht mit der oberen Halbschale 40 in Berührung, sondern hintergreift den inneren Rand des oberen Laufringes 32 und steht mit der oberen Oberfläche dieses Laufringes in Gleitberührung.

Die Vorspannung der Dichtlippen 46 und 54 ist so gewählt, daß eine gute Abdichtung gewährleistet wird, andererseits jedoch die an den Dichtflächen auftretenden Reibungskräfte gering bleiben, so daß die leichtgängige Verdrehung der Halbschalen 40, 42 relativ zueinander nicht behindert wird. Auch wenn sich infolge von Radialkräften und Materialverformungen die Halbschalen 40, 42 radial gegeneinander verlagern, gewährleistet die Nachgiebigkeit der Dichtlippen 46, 54 und erforderlichenfalls auch des Labyrinthprofils 52, daß die Reibungskräfte nicht nennenswert zunehmen, so daß die Leichtgängigkeit des Lagers erhalten bleibt.

## Patentansprüche

1. Federbeinlager mit zwei Laufringen (32), axial zwischen diesen angeordneten Wälzkörpern (34) und einem die Laufringe aufnehmenden Gehäuse (38), das aus zwei ringförmigen Halbschalen (40, 42) aus Kunststoff zusammengesetzt ist, über die sich das Fahrzeuggewicht auf dem oberen Laufring und der untere Laufring auf einem Federteller abstützt, sowie mit einer Dichtung (44; 46), die den Zwischenraum zwischen den Laufringen abdichtet, **dadurch gekennzeichnet, daß** die Dichtung (44; 46) mit einem Kunststoffmaterial (48; 54, 55), das weicher ist als das Material der Halbschalen (40, 42) an diese Halbschalen (40, 42) angespritzt ist.

2. Federbeinlager nach Anspruch 1, **dadurch gekennzeichnet, daß** die Dichtung (44; 46) ganz aus dem weicheren Material besteht.

3. Federbeinlager nach Anspruch 1 oder 2, **dadurch gekennzeichnet, daß** die Dichtung (44; 46) eine Dichtlippe (48; 56) aufweist.

4. Federbeinlager nach Anspruch 3, **dadurch gekennzeichnet, daß** die Dichtlippe (56) mit einem der Laufringe (32) in Gleitberührung steht.

5. Federbeinlager nach einem der vorstehenden Ansprüche, **dadurch gekennzeichnet, daß** die Dichtung (46) ein Labyrinthprofil (54) aufweist.

6. Federbeinlager nach einem der vorstehenden Ansprüche, **dadurch gekennzeichnet, daß** die Halbschalen (40, 42) durch die Dichtung (44; 46) miteinander verrastbar sind.

7. Federbeinlager nach einem der vorstehenden Ansprüche, **dadurch gekennzeichnet, daß** an jeder der beiden Fugen, die die Halbschalen (40, 42) miteinander bilden, eine Dichtung (44, 46) vorgesehen ist.

## Claims

1. Telescopic strut bearing comprising two ball races (30, 32), rolling elements (34), which are arraged axially therebetween, and a housing (38) accommodating the ball races and being composed of two annular half-shells (40, 42) of plastic material, through which the weight of the vehicle is supported on the upper ball race (30) and the lower ball race (32) is supported on a spring plate, and comprising a seal (44;46), which seals off the intermediate space between the ball races, and a seat (28) which accommodates the housing (38) and a head element (22) of the telescopic strut such that the telescopic strut is held in an inclined position relative to the housing (38), **characterised in that** the seal (44; 46) is injection moulded with a plastic material, that is softer than the material of the half-shells (40, 42), to these half-shells.

2. Telescopic strut bearing according to claim 1, **characterised in that** the seal (44; 46) is completely constituted by the relatively soft material.

3. Telescopic strut bearing according to claim 1 or 2, **characterised in that** the seal (44; 46) has a sealing lip (48; 56).

4. Telescopic strut bearing according to claim 3, **characterised in that** the sealing lip (56) is in sliding contact with one of the ball races (32).

5. Telescopic strut bearing according to any one of the preceding claims, **characterised in that** the seal (46) has a labyrinth profile section (54).

6. Telescopic strut bearing according to any one of the preceding claims, **characterised in that** the half-shells (40, 42) can be locked to each other by the seal (44; 46).

7. Telescopic strut bearing according to any one of the preceding claims, **characterised in that** a seal (44, 46) is provided at each of the two joints which the half-shells (40, 42) form with each other.

## Revendications

1. Appui pour jambe de force à ressort comportant deux bagues de roulement (30, 32), des corps de roulement (34), disposés axialement entre celles-ci, et un boîtier (38) accommodant les bagues de roulement et composé de deux demi-coques (40, 42) en matière plastique de forme annulaire, par l'intermédiaire duquelles le poids du véhicule prend appui sur la bague de roulement supérieure (32) et la bague de roulement inférieure (30) prend appui sur une coupelle de ressort (20), ainsi qu'une garniture d'étanchéité (44; 46), qui rend étanche l'interstice entre les bagues de roulement, et une siège (28) maintenat le boîtier (38) et une pièce de tête (22) de l'appui tel que l'appui pour jambe de force à ressort est maintenu dans une position inclinée relative au boîtier (38), **caractérisé en ce que** la garniture d'étanchéité (44; 46) est moulée par injection, dans une matière plastique plus souple que celle des demi-coques (40, 42), sur cettes demi-coques (40, 42).

2. Appui pour jambe de force à ressort selon la revendication 1, **caractérisé en ce que** la garniture d'étanchéité (44; 46) est entièrement faite de la matière plus souple.

3. Appui pour jambe de force à ressort selon la revendication 1 ou 2, **caractérisé en ce que** la garniture d'étanchéité (44; 46) comporte une lèvre d'étanchéité (48; 56).

4. Appui pour jambe de force à ressort selon la revendication 3, **caractérisé en ce que** la lèvre d'étanchéité (48; 56) est en contact glissant avec l'une des bagues de roulement (32).

5. Appui pour jambe de force à ressort selon l'une des revendications précédentes, **caractérisé en ce que** la garniture d'étanchéité (44; 46) présente un profil en labyrinthe (54).

6. Appui pour jambe de force à ressort selon l'une des revendications précédentes, **caractérisé** en ce les demi-coques (40, 42) peuvent s'accrocher entre elles au moyen de la garniture d'étanchéité (44; 46).

7. Appui pour jambe de force à ressort selon l'une des revendications précédentes, **caractérisé en ce qu'**il est prévu und garniture d'étanchéité (44; 46) sur chacun des deux joints que forment entre elles les demi-coques (40, 42).
